# FASCICULE DE BREVET EUROPEEN

(11) **EP 2 083 155 B1**
(45) Date de publication et mention de la délivrance du brevet: **22.07.2015**
(21) Numéro de dépôt: 09290058.8
(22) Date de dépôt: 27.01.2009
(51) Int. Cl.: F02B 25/14, F02D 13/02

(54) **Procédé de balayage des gaz brûlés résiduels avec une double levée de soupape d'admission d'un moteur à combustion interne suralimenté à injection directe, notamment de type Diesel**
Verfahren zur Spülung der verbrannten Abgase mit doppeltem Einlassventilhub eines Verbrennungsmotors mit Aufladung und Direkteinspritzung, insbesondere vom Dieseltyp
Method for scanning residual combustion gas with double intake valve lift of a supercharged direct-injection internal combustion engine, in particular a diesel engine

(30) Priorité: 28.01.2008 FR 0800485
(43) Date de publication de la demande: 29.07.2009
(73) Titulaire: IFP Energies nouvelles, 92852 Rueil-Malmaison Cedex (FR)
(72) Inventeur: Bression, Guillaume, 94300 Vincennes (FR)

(56) Documents cités:
- EP-A- 1 650 421
- AT-U1- 5 783
- DE-A1-102005 032 791
- DE-B3-102004 030 605
- US-A1- 2002 043 243

## Description

La présente invention se rapporte à un procédé de balayage des gaz brûlés résiduels d'un moteur à combustion interne suralimenté à injection directe, notamment de type Diesel.

Généralement, la puissance délivrée par un moteur à combustion interne est tributaire de la quantité d'air introduite dans la chambre de combustion de ce moteur, quantité d'air qui est elle-même proportionnelle à la densité de cet air.

Comme cela est déjà connu, en cas de besoin d'une forte puissance, il est prévu d'augmenter cette quantité d'air au moyen d'une compression de l'air avant qu'il ne soit admis dans cette chambre de combustion. Cette opération, appelée suralimentation, peut être réalisée par tous moyens, tel qu'un turbocompresseur ou un compresseur entraîné, comme un compresseur à vis.

En outre, pour pouvoir augmenter encore plus cette quantité d'air dans le cylindre, il est prévu d'évacuer les gaz brûlés résiduels contenus initialement dans le volume mort de la chambre de combustion, et ce avant la fin de la phase d'échappement du moteur, pour les remplacer par de l'air suralimenté. Cette étape est plus communément appelée balayage des gaz brûlés.

Comme cela est connu par le document FR-A-2 886 342 et EP-A-1650421, ce balayage peut être réalisé, en fin de phase d'échappement du moteur et en début de phase d'admission, par un croisement entre les soupapes d'échappement et d'admission d'un même cylindre. Ce croisement est réalisé en ouvrant simultanément ces soupapes d'échappement et d'admission pendant quelques degrés à quelques dizaines de degrés d'angle de rotation de vilebrequin.

Grâce à cela, l'air d'admission est introduit dans la chambre de combustion avant la fin de la phase d'échappement en repoussant les gaz d'échappement qui y sont contenus. Ces gaz sont ainsi évacués au travers de la soupape d'échappement et sont remplacés par de l'air d'admission.

Ce type de moteur bien que donnant satisfaction présente néanmoins des inconvénients non négligeables.

En effet, un tel balayage nécessite la réalisation d'embrèvements de forte profondeur dans le piston, ce qui a pour conséquence de dégrader la forme de la chambre de combustion ainsi que le déroulement de la combustion du mélange carburé. De plus, ce type de moteur impose une modification en parallèle des angles d'ouverture des soupapes d'échappement et de fermeture des soupapes d'admission.

La présente invention se propose de remédier aux inconvénients ci-dessus grâce à un procédé de balayage de conception simple qui permet d'améliorer la richesse limite du mélange carburé et d'augmenter la suralimentation et le remplissage de la chambre de combustion sans dégrader la forme de cette chambre. De plus, les émissions de particules sont limitées et la puissance du moteur est augmentée.

A cet effet, la présente invention concerne un procédé de balayage des gaz brûlés résiduels d'un moteur à combustion interne à injection directe, notamment de type Diesel, comprenant au moins un cylindre comportant une chambre de combustion, au moins un moyen d'échappement avec une soupape d'échappement contrôlée par des moyens de commande d'échappement, au moins un moyen d'admission avec une soupape d'admission contrôlée par des moyens de commande d'admission et une unité de calcul recevant les valeurs relatives à la pression d'admission et d'échappement du moteur, caractérisé en ce qu'il consiste, lors du fonctionnement du moteur à faibles régimes et à fortes charges de ce moteur :
- à réaliser une séquence d'ouverture/fermeture de la soupape d'échappement lors la phase d'échappement du moteur,
- pendant cette séquence d'ouverture/fermeture de la soupape d'échappement, à réaliser au moins une séquence d'ouverture/fermeture de la soupape d'admission lorsque la pression d'admission est supérieure à la pression d'échappement pour évacuer les gaz brûlés résiduels au travers du moyen d'échappement et les remplacer par de l'air d'admission

Le procédé peut consister à réaliser la fermeture de la soupape d'admission au moins avant la fin de la phase d'échappement.

Le procédé peut consister à réaliser la fermeture de la soupape d'admission à la fin de la phase d'échappement.

Le procédé peut consister à réaliser au moins une séquence d'ouverture/fermeture de la soupape d'admission dans une zone de la phase d'échappement où le différentiel de pression entre la pression d'admission et la pression d'échappement est le plus élevé.

Le procédé peut consister à diminuer la hauteur de la levée de la soupape d'admission pendant la phase d'échappement de manière à ce qu'elle soit inférieure à la hauteur de la levée de la soupape d'échappement.

Le procédé peut consister à diminuer l'étalement de la levée de la soupape d'admission pendant la phase d'échappement de manière à ce qu'il soit inférieur à l'étalement de la levée de la soupape d'échappement.

Les autres caractéristiques et avantages de l'invention vont apparaître à la lecture de la description qui va suivre, donnée à titre uniquement illustratif et non limitatif, et à laquelle sont annexés :
- la figure 1 qui montre un moteur suralimenté à combustion interne utilisant le procédé selon l'invention ;
- la figure 2 qui montre des courbes illustrant les différentes lois de levée (L) des soupapes d'admission et d'échappement en fonction de la rotation du vilebrequin (en degrés V) du moteur utilisant le procédé selon l'invention et
- la figure 3 qui est un graphique avec des courbes illustrant la pression (P en bar) à l'admission (Pa) et à l'échappement (Pe) d'un cylindre en phase de balayage de gaz brûlés en fonction de la rotation du vilebrequin (en degrés).

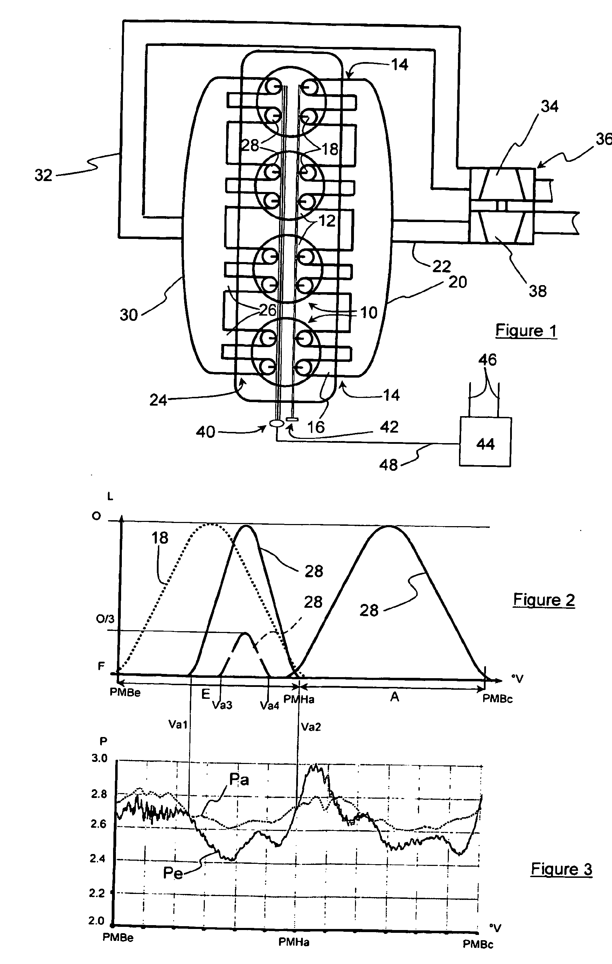

Sur la figure 1, le moteur à combustion interne illustré est un moteur à combustion interne suralimenté de type à autoallumage, notamment Diesel, fonctionnant selon un mode à quatre temps avec une phase d'admission A, de compression C, de détente D et d'échappement E.

Ce moteur comprend au moins un cylindre 10, ici quatre cylindres, dans lequel coulisse un piston (non représenté) en un mouvement alternatif rectiligne entre un point mort haut (PMH) et un point mort bas (PMB) en délimitant une chambre de combustion 12 dans laquelle se produit la combustion d'un mélange carburé.

Comme cela est largement connu, ce mélange carburé peut être, soit un mélange d'air suralimenté additionné à des gaz d'échappement recirculés (ou EGR) avec un carburant, soit un mélange d'air suralimenté avec un carburant.

Le cylindre comporte au moins un moyen d'échappement 14 des gaz brûlés, ici deux, comprenant une tubulure d'échappement 16 associée à un moyen d'obturation, comme une soupape d'échappement 18.

Les tubulures d'échappement 16 aboutissent à un collecteur d'échappement 20 permettant l'évacuation des gaz brûlés issus des chambres de combustion, ce collecteur étant relié à une ligne d'échappement 22.

Ce cylindre comporte également au moins un moyen d'admission 24, ici deux, qui comprend une tubulure d'admission 26 contrôlée par un moyen d'obturation, tel qu'une soupape d'admission 28.

De manière habituelle, un collecteur d'admission 30 est relié aux tubulures d'admission 26 et permet de répartir de l'air frais (généralement suralimenté additionné ou non de gaz d'échappement recirculés) dans les chambres de combustion 12 et à une conduite d'alimentation 32.

Le collecteur d'admission est relié par la conduite 32 à la sortie de la section de compression 34 d'un turbocompresseur 36 alors que le collecteur d'échappement 20 est raccordé par la ligne 22 à l'entrée de la turbine 38 de ce turbocompresseur.

Les soupapes d'admission 28 sont commandées en ouverture et en fermeture par tous moyens connus permettant de réaliser une double levée de ces soupapes pendant le fonctionnement nécessitant une forte puissance de ce moteur, notamment à faibles régimes, ou une simple levée lors du fonctionnement conventionnel de ce moteur aux moyens et forts régimes

Pour cela, il est utilisé des moyens de commande 40, de type arbre à cames VVA (Variable Valve Actuation), qui permettent de réaliser les deux lois de levées de ces soupapes. Une première loi permet d'effectuer au moins une séquence d'ouverture/fermeture des soupapes d'admission 28 pendant la phase d'échappement E du moteur suivie d'une séquence conventionnelle d'ouverture/fermeture de ces soupapes pendant la phase d'admission A. L'autre loi de levée permet d'exécuter uniquement une séquence d'ouverture/fermeture des soupapes d'admission pendant la phase d'admission A du moteur.

A titre d'exemple non limitatif, cet arbre à cames comporte une came associée à une seconde came permettant d'assurer la loi de double levée de ces soupapes d'admission pendant la phase d'échappement E et d'admission A du moteur ainsi qu'un dispositif de débrayage rendant inopérationnelle l'une des cames, par exemple la seconde came, pour réaliser la simple levée des soupapes d'admission pendant la phase d'admission du moteur.

Bien entendu et cela sans sortir du cadre de l'invention, ces moyens de commande peuvent être des moyens de commande spécifiques pour chaque soupape, comme un actionneur électromagnétique, électropneumatique ou autre, qui agit directement sur la tige de la soupape.

Il est à noter que le terme "levée" correspond à la représentation graphique (selon deux axes) du mouvement d'une soupape à partir du début de son ouverture de l'orifice de la tubulure jusqu'à la fin de sa fermeture de cet orifice en passant par sa position de pleine ouverture.

Les soupapes d'échappement 18 sont commandées en ouverture et fermeture par tous moyens conventionnels, comme un arbre à cames classique 42 commandé en rotation par une voie d'entraînement reliée au vilebrequin de ce moteur, telle qu'une courroie crantée.

Ce moteur comprend également une unité de calcul 44, dite calculateur-moteur, qui contient des cartographies ou des tables de données permettant, en fonction des valeurs des paramètres du moteur transmises par des lignes de données 46, comme les pressions d'admission dans le collecteur d'admission 30 et d'échappement dans le collecteur d'échappement 20, le régime du moteur ou sa charge, d'évaluer la puissance que doit générer ce moteur pour répondre à la demande du conducteur du véhicule.

Plus précisément, ce calculateur-moteur permet, en fonction de ces valeurs, de contrôler plus particulièrement les lois de levée de soupapes d'admission 28 par une ligne de commande 48 agissant sur les moyens 40 de façon à permettre une simple levée ou une double levée de ces soupapes.

Ainsi, lorsque le moteur doit évoluer dans des conditions qui correspondent à une demande de forte puissance, en particulier pour les faibles régimes, le calculateur-moteur contrôle ce moteur pour qu'il fonctionne avec un balayage des gaz brûlés résiduels présents dans la chambre de combustion lorsque la pression Pa relevée dans le collecteur d'admission est supérieure à la pression Pe régnant dans le collecteur d'échappement.

En se rapportant en plus à la figure 2 qui montre les différentes lois de levée des soupapes d'admission 28 et d'échappement 18 entre une position d'ouverture (0) et de fermeture (F) en fonction de l'angle de rotation de vilebrequin (°V), associée à la figure 3 montrant les pressions d'admission (Pa) et d'échappement (Pe) durant ces mêmes angles de rotation de vilebrequin, le calculateur 44 contrôle plus particulièrement les moyens de commande 40 par la ligne 48 pour réaliser une double levée des soupapes d'admission 28 pour répondre à la demande de puissance.

Plus précisément et comme mieux illustré sur cette figure 2, pendant la phase d'échappement E du moteur, les soupapes d'échappement 18 suivent conventionnellement une séquence d'ouverture/fermeture entre le point mort bas échappement (PMBe) et le point mort haut admission (PMHa) du piston de façon à évacuer les gaz d'échappement contenus dans la chambre de combustion vers le collecteur d'échappement 20.

Conjointement à cette séquence d'ouverture/fermeture des soupapes d'échappement, les moyens de commande 40 sont pilotés par le calculateur-moteur pour réaliser au moins une séquence d'ouverture/fermeture des soupapes d'admission 28 pendant cette phase d'échappement et durant la séquence d'ouverture/fermeture des soupapes d'échappement. Cette séquence est plus particulièrement réalisée lorsque le calculateur reçoit comme information que la pression Pa considérée au niveau des soupapes d'admission 28 est supérieure à la pression Pe relevée au niveau des soupapes d'échappement 18.

Plus particulièrement, ces soupapes d'admission s'ouvrent au PMHe ou après ce PMBe et se ferment au PMHa. Compte tenu du différentiel de pression entre la pression d'admission Pa et la pression d'échappement Pe (voir figure 3) et qui est globalement positif pour la pression d'admission, les gaz d'échappement contenus dans la chambre de combustion 12 sont évacués au travers des soupapes d'échappement 18 vers le collecteur d'échappement 20 pour être ensuite dirigés dans la ligne d'échappement 22. Ces gaz d'échappement sont de ce fait remplacés par de l'air suralimenté qui va permettre de pouvoir augmenter globalement la quantité d'air présent dans la chambre de combustion à la fin de la phase d'admission A du moteur.

Préférentiellement, comme illustré en trait fort sur la figure 2, l'étalement de la levée des soupapes d'admission 28 peut être inférieur à celui des soupapes d'échappement 18. Ces soupapes d'admission s'ouvrent ainsi à un angle de vilebrequin Va1 après le PMBe et se ferment à un angle Va2 au voisinage du PMHa. La levée des soupapes d'admission entre les angles Va1 et Va2 correspond à une zone de la phase d'échappement dans laquelle le différentiel de pression entre la pression d'admission Pa et la pression d'échappement Pe est globalement le plus élevé (voir figure 3) pour la phase d'échappement considérée tout en étant positif pour la pression d'admission.

Avantageusement, la hauteur de la levée des soupapes d'admission est sensiblement égale à la hauteur de la levée des soupapes d'échappement mais, comme cela est illustré en traits pointillés sur la figure 2, il peut être envisagé de faire varier la hauteur de la levée de ces soupapes d'admission, comme par exemple entre une pleine ouverture O et un tiers d'ouverture 0/3, de façon à pouvoir contrôler l'évacuation des gaz brûlés résiduels.

De même, l'étalement de la levée des soupapes d'admission peut être variable de façon à débuter la séquence d'ouverture/fermeture à l'angle Va3 après l'angle Va1 et la terminer à l'angle Va4 avant l'angle Va2.

De manière préférentielle, la levée maximale et l'étendue maximale de ces soupapes d'admission pendant la phase d'échappement sont moindres que celles des soupapes d'échappement.

Durant la phase d'admission A de ce moteur qui suit cette phase d'échappement, le calculateur 44 pilote les moyens de commande 40 de ces soupapes d'admission 28 de manière à ce qu'elles s'ouvrent à nouveau conventionnellement au voisinage du PMHa et se referment au voisinage du point mort bas compression (PMBc).

Ainsi, pendant cette seconde levée des soupapes d'admission, de l'air suralimenté vient s'ajouter à l'air suralimenté déjà présent dans la chambre de combustion 12 après l'opération de balayage pour obtenir à la fin de la phase d'admission A une plus grande quantité d'air.

Lors du fonctionnement conventionnel du moteur sans balayage des gaz brûlés, le calculateur-moteur 44 pilote alors, par la ligne 48, les moyens de commande 40 de façon à ne pas réaliser, durant la phase d'échappement E, une levée des soupapes d'admission 38 en rendant inopérationnelle la deuxième came de l'arbre à cames comme évoqué plus haut, ce qui permet de maintenir en position de fermeture ces soupapes d'admission. Pendant cette phase d'échappement, seules les soupapes d'échappement 18 suivent classiquement une séquence d'ouverture/fermeture entre le PMBe et le PMHa.

Cette phase d'échappement est suivie d'une phase d'admission A durant laquelle les soupapes d'admission 28 suivent une séquence conventionnelle d'ouverture/fermeture entre le PMHa et le PMBc.

Grâce à l'invention, il est très facile de passer d'un fonctionnement du moteur avec balayage de gaz d'échappement avec possibilité de réglage des paramètres de balayage (quantité de gaz brûlés évacuée, moment de l'évacuation des gaz brûlés, ...) en agissant sur la loi de levée de soupapes d'admission pendant la phase d'échappement à un fonctionnement conventionnel de ce moteur, et inversement. En outre, la modularité de la loi d'admission permet de gérer le balayage des gaz brûlés résiduels en fonction de la différence de pression entre la pression d'admission et la pression d'échappement.

La présente invention n'est pas limitée à l'exemple décrit mais englobe toutes variantes et tous équivalents.

## Revendications

1. Procédé de balayage des gaz brûlés résiduels d'un moteur à combustion interne à injection directe, notamment de type Diesel, comprenant au moins un cylindre (10) comportant une chambre de combustion (12), au moins un moyen d'échappement (14) avec une soupape d'échappement (18) contrôlée par des moyens de commande d'échappement (40), au moins un moyen d'admission (24) avec une soupape d'admission (28) contrôlée par des moyens de commande d'admission (40) et une unité de calcul (44) recevant les valeurs relatives à la pression d'admission (Pa) et d'échappement (Pe) du moteur, **caractérisé en ce qu'**il consiste, lors du fonctionnement du moteur à faibles régimes et à fortes charges de ce moteur :
- à réaliser une séquence d'ouverture/fermeture de la soupape d'échappement (18) lors la phase d'échappement du moteur,
- pendant cette séquence d'ouverture/fermeture de la soupape d'échappement, à réaliser au moins une séquence d'ouverture/fermeture de la soupape d'admission (28) lorsque la pression d'admission (Pa) est supérieure à la pression d'échappement (Pe) pour évacuer les gaz brûlés résiduels au travers du moyen d'échappement (14) et les remplacer par de l'air d'admission.

2. Procédé de balayage des gaz brûlés résiduels d'un moteur selon la revendication 1, **caractérisé en ce qu'**il consiste à réaliser la fermeture de la soupape d'admission (28) au moins avant la fin de la phase d'échappement.

3. Procédé de balayage des gaz brûlés résiduels d'un moteur selon la revendication 1, **caractérisé en ce qu'**il consiste à réaliser la fermeture de la soupape d'admission (28) à la fin de la phase d'échappement.

4. Procédé de balayage des gaz brûlés résiduels d'un moteur selon la revendication 1, **caractérisé en ce qu'**il consiste à réaliser au moins une séquence d'ouverture/fermeture de la soupape d'admission (28) dans une zone (Va1-Va2) de la phase d'échappement où le différentiel de pression entre la pression d'admission (Pa) et la pression d'échappement (Pe) est le plus élevé.

5. Procédé de balayage des gaz brûlés résiduels d'un moteur selon l'une des revendications précédentes, **caractérisé en ce qu'**il consiste à diminuer la hauteur de la levée de la soupape d'admission (28) pendant la phase d'échappement de manière à ce qu'elle soit inférieure à la hauteur de la levée de la soupape d'échappement.

6. Procédé de balayage des gaz brûlés résiduels d'un moteur selon l'une des revendications précédentes, **caractérisé en ce qu'**il consiste à diminuer l'étalement de la levée de la soupape d'admission (28) pendant la phase d'échappement de manière à ce qu'il soit inférieur à l'étalement de la levée de la soupape d'échappement.

## Patentansprüche

1. Verfahren zum Spülen der restlichen verbrannten Gase eines Brennkraftmotors mit Direkteinspritzung, insbesondere des Typs Diesel, der mindestens einen Zylinder (10) umfasst, der eine Brennkammer (12) umfasst, mindestens ein Auslassmittel (14) mit einem Auslassventil (18), das von Auslasssteuermitteln (40) gesteuert ist, mindestens ein Ansaugmittel (24) mit einem Ansaugventil (28), das von Ansaugsteuermitteln (40) gesteuert ist, und eine Recheneinheit (44), die die Werte in Zusammenhang mit dem Ansaugdruck (Pa) und dem Auslassdruck (Pe) des Motors empfängt, umfasst, **dadurch gekennzeichnet, dass** es beim Betrieb des Motors mit niedrigen Drehzahlen und hohen Lasten dieses Motors aus Folgendem besteht:
- Ausführen einer Öffnungs-/Schließabfolge des Auslassventils (18) bei der Auslassphase des Motors,
- während dieser Öffnungs-/Schließabfolge des Auslassventils Ausführen mindestens einer Öffnungs-/Schließabfolge des Ansaugventils (28), wenn der Ansaugdruck (Pa) höher ist als der Auslassdruck (Pe), um die restlichen verbrannten Gase durch das Auslassventil (14) abzuleiten und sie durch Ansaugluft zu ersetzen.

2. Verfahren zum Spülen der restlichen verbrannten Gase eines Motors nach Anspruch 1, **dadurch gekennzeichnet, dass** es darin besteht, das Schließen des Ansaugventils (28) mindestens vor dem Ende der Auslassphase auszuführen.

3. Verfahren zum Spülen der restlichen verbrannten Gase eines Motors nach Anspruch 1, **dadurch gekennzeichnet, dass** es darin besteht, das Schließen des Ansaugventils (28) an dem Ende der Auslassphase auszuführen.

4. Verfahren zum Spülen der restlichen verbrannten Gase eines Motors nach Anspruch 1, **dadurch gekennzeichnet, dass** es darin besteht, mindestens eine Öffnungs-/Schließabfolge des Ansaugventils (28) in einem Bereich (Va1-Va2) der Auslassphase, in dem der Druckunterschied zwischen dem Ansaugdruck (Pa) und dem Auslassdruck (Pe) am höchsten ist, auszuführen.

5. Verfahren zum Spülen der restlichen verbrannten Gase eines Motors nach einem der vorhergehenden Ansprüche, **dadurch gekennzeichnet, dass** es darin besteht, die Höhe des Hubs des Ansaugventils (28) während der Auslassphase derart zu verringern, dass sie kleiner ist als die Höhe des Hubs des Auslassventils.

6. Verfahren zum Spülen der restlichen verbrannten Gase eines Motors nach einem der vorhergehenden Ansprüche, **dadurch gekennzeichnet, dass** es darin besteht, die Verteilung des Hubs des Ansaugventils (28) während der Auslassphase derart zu verringern, dass sie kleiner ist als die Verteilung des Hubs des Auslassventils.

## Claims

1. A method of scavenging residual burnt gas of a direct-injection internal-combustion engine, notably of diesel type, comprising at least one cylinder (10) including a combustion chamber (12), at least one exhaust means (14) with an exhaust valve (18) controlled by exhaust control means (40), at least one intake means (24) with an intake valve (28) controlled by intake control means (40) and a processing unit (44) receiving the values relative to the intake (Pa) and exhaust (Pe) pressure of the engine, **characterized in that** it consists, when the engine is running under low speed and high load conditions:
- in carrying out a sequence of opening/closing of exhaust valve (18) during the exhaust phase of the engine,
- during this exhaust valve opening/closing sequence, in carrying out at least one sequence of opening/closing of intake valve (28) when intake pressure (Pa) is higher than exhaust pressure (Pe) so as to discharge the residual burnt gas through exhaust means (14) and to replace it by intake air.

2. A method of scavenging the residual burnt gas of an engine as claimed in claim 1, **characterized in that** it consists in performing closing of intake valve (28) at least before the end of the exhaust phase.

3. A method of scavenging the residual burnt gas of an engine as claimed in claim 1, **characterized in that** it consists in performing closing of intake valve (28) at the end of the exhaust phase.

4. A method of scavenging the residual burnt gas of an engine as claimed in claim 1, **characterized in that** it consists in performing at least one opening/closing sequence of intake valve (28) in a zone (Va1-Va2) of the exhaust phase where the pressure differential between intake pressure (Pa) and exhaust pressure (Pe) is the highest.

5. A method of scavenging the residual burnt gas of an engine as claimed in any one of the previous claims, **characterized in that** it consists in decreasing the height of the lift of intake valve (28) during the exhaust phase so that it is lower than the height of the exhaust valve lift.

6. A method of scavenging the residual burnt gas of an engine as claimed in any one of the previous claims, **characterized in that** it consists in decreasing the spread of the lift of intake valve (28) during the exhaust phase so that it is lower than the spread of the exhaust valve lift.
